# EUROPÄISCHE PATENTSCHRIFT

(11) **EP 1 520 898 B1**
(45) Veröffentlichungstag und Bekanntmachung des Hinweises auf die Patenterteilung: **21.07.2010**
(21) Anmeldenummer: 04018898.9
(22) Anmeldetag: 10.08.2004
(51) Int. Cl.: C09J 11/08

(54) **Verwendung Melaminharz enthaltener Haltklebstoffe zur Herstellung von selbstklebenden Artikeln**
Use of pressure-sensitive adhesives comprising melamin resin for producing pressure-sensitive adhesive articles
Utilisation d'une composition auto-adhésive contenant une résine de mélamine pour fabriquer des articles autocollants

(30) Priorität: 30.09.2003 DE 10345799
(43) Veröffentlichungstag der Anmeldung: 06.04.2005
(73) Patentinhaber: BASF SE, 67056 Ludwigshafen (DE)
(72) Erfinder: Schumacher, Karl-Heinz, Dr., 67433 Neustadt (DE); Diehl, Heiko, 67136 Fussgönheim (DE); Dragon, Andree, 67346 Speyer (DE)

(56) Entgegenhaltungen:
- DE-A1- 2 526 747
- US-A- 4 077 926
- US-A- 4 396 675
- PATENT ABSTRACTS OF JAPAN Bd. 017, Nr. 361 (C-1080), 8. Juli 1993 (1993-07-08) & JP 05 051566 A (SEKISUI CHEM CO LTD), 2. März 1993 (1993-03-02)

## Beschreibung

Die Erfindung betrifft die Verwendung eines Klebstoffs, enthaltend
A) ein durch radikalische Polymerisation erhältliches Polymer, welches zu mindestens 60 Gew. % aus sogenannten Hauptmonomeren, ausgewählt aus
   C1 bis C20 Alkyl(meth)acrylaten, Vinylestern von bis zu 20 C-Atome enthaltenden Carbonsäuren, Vinylaromaten mit bis zu 20 C-Atomen, ethylenisch ungesättigten Nitrilen, Vinylhalogeniden, Vinylethern von 1 bis 10 C Atome enthaltenden Alkoholen, aliphatischen Kohlenwasserstoffen mit 2 bis 8 C Atomen und ein oder zwei Doppelbindungen oder Mischungen dieser Monomeren, aufgebaut ist, und
B) ein Aminotriazinharz zur Herstellung von selbstklebenden Artikeln mit Weich-PVC als Trägermaterial.

Für Außenanwendungen werden häufig selbstklebende Etiketten und Bänder sowie bedruckte Folien mit Weich-PVC als Trägermaterial eingesetzt. Weich-PVC-Folien enthalten niedermolekulare Weichmacher auf Phthalat Basis oder polymere Weichmacher. Ein Problem, das durch die Verwendung dieser Weichmacher auftritt, ist, dass der Weichmacher aus der Folie in den Haftklebstoff migrieren kann. Hierdurch werden die anwendungstechnischen Klebeeigenschaften beeinträchtigt. Sowohl die Kohäsion des Klebstoffs, als auch die Adhäsion des Klebstoffs zur Oberfläche, auf die das Etikett bzw. die Folie geklebt wird, werden durch die Migration des Weichmachers in den Klebstoff im allgemeinen deutlich vermindert.

Im Außenbereich sind die selbstklebenden Artikel auch dem Einfluß von Feuchtigkeit ausgesetzt.

Die Einwirkung von Wasser auf den Klebstofffilm führt zu einer unerwünschten weißen Trübung, welche Weißanlaufen genannt wird.

Bei selbstklebenden Artikeln mit Polymerfolien, insbesondere Weich-PVC als Trägermaterial, kommt es häufig zu einem Schrumpfen der Folie bei der späteren Verwendung. Ein Schrumpfen ist insbesondere zu beobachten, wenn die selbstklebenden Artikel bei der Verwendung erhöhten Temperaturen ausgesetzt sind.

Gewünscht sind daher Klebstoffe, die selbstklebende Artikel mit einem verbesserten Schrumpfverhalten ergeben.

Klebstoffe zur Herstellung von selbstklebenden Artikeln mit Weich-PVC als Trägermaterial sind z.B. aus DE-A-10229733 (PF 53677) bekannt.

Klebstoffe, welche veretherte Harze aus Melamin enthalten, und eine gute Haftung auf Weich-PVC zeigen, sind aus DE-A-2 526 747 bekannt.

Polymerdispersionen, welche Aminotriazine enthalten, werden in DE-A-4426186 (PF 45063) als Bindemittel für Lacke beschrieben.

Aufgabe der vorliegenden Erfindung waren daher Klebstoffe für selbstklebende Artikel mit Weich-PVC als Trägermaterial mit möglichst geringer Schrumpfung und möglichst guter Wasserbeständigkeit (Weißanlaufen). Die Klebstoffe sollen weiterhin eine gute Adhäsion und Kohäsion haben, sowie gut verarbeitbar sein.

Demgemäß wurden die eingangs definierte Verwendung gefunden.

Der bei der erfindungsgemäßen Verwendung eingesetzte Klebstoff enthält ein Polymer und ein Aminotriazinderivat.

Das Polymer ist durch radikalische Polymerisation von ethylenisch ungesättigten Verbindungen (Monomere) erhältlich.

Das Polymer besteht zu mindestens 60 Gew.-%, bevorzugt zu mindestens 80 Gew.-%, besonders bevorzugt zu mindestens 90 Gew.-% aus sogenannten Hauptmonomeren.

Die Hauptmonomeren sind ausgewählt aus C₁-C₂₀-Alkyl(meth)acrylaten, Vinylestern von bis zu 20 C-Atome enthaltenden Carbonsäuren, Vinylaromaten mit bis zu 20 C-Atomen, ethylenisch ungesättigten Nitrilen, Vinylhalogeniden, Vinylethern von 1 bis 10 C-Atome enthaltenden Alkoholen, aliphatischen Kohlenwasserstoffen mit 2 bis 8 C-Atomen und ein oder zwei Doppelbindungen oder Mischungen dieser Monomeren.

Zu nennen sind z.B. (Meth)acrylsäurealkylester mit einem C₁-C₁₀-Alkylrest, wie Methylmethacrylat, Methylacrylat, n-Butylacrylat, Ethylacrylat und 2-Ethylhexylacrylat.

Insbesondere sind auch Mischungen der (Meth)acrylsäurealkylester geeignet.

Vinylester von Carbonsäuren mit 1 bis 20 C-Atomen sind z.B. Vinyllaurat, -stearat, Vinylpropionat, Versaticsäurevinylester und Vinylacetat.

Als vinylaromatische Verbindungen kommen Vinyltoluol, a- und p-Methylstyrol, a-Butylstyrol, 4-n-Butylstyrol, 4-n-Decylstyrol und vorzugsweise Styrol in Betracht. Beispiele für Nitrile sind Acrylnitril und Methacrylnitril.

Die Vinylhalogenide sind mit Chlor, Fluor oder Brom substituierte ethylenisch ungesättigte Verbindungen, bevorzugt Vinylchlorid und Vinylidenchlorid.

Als Vinylether zu nennen sind z.B. Vinylmethylether oder Vinylisobutylether. Bevorzugt wird Vinylether von 1 bis 4 C-Atome enthaltenden Alkoholen.

Als Kohlenwasserstoffe mit 4 bis 8 C-Atomen und zwei olefinischen Doppelbindungen seien Butadien, Isopren und Chloropren genannt.

Als Hauptmonomere bevorzugt sind die C₁- bis C₁₀-Alkylacrylate und -methacrylate, insbesondere C₁-bis C₈-Alkylacrylate und -methacrylate und Vinylaromaten, insbesondere Styrol und deren Mischungen.

Ganz besonders bevorzugt sind Methylacrylat, Methylmethacrylat, Ethylacrylat, n-Butylacrylat, n-Hexylacrylat, Octylacrylat und 2-Etyhlhexylacrylat, Styrol sowie Mischungen dieser Monomere.

Neben den Hauptmonomeren kann das Polymer weitere Monomere enthalten, z.B. Monomere mit Carbonsäure, Sulfonsäure oder Phosphonsäuregruppen. Bevorzugt sind Carbonsäuregruppen. Genannt seien z.B. Acrylsäure, Methacrylsäure, Itaconsäure, Maleinsäure oder Fumarsäure.

Weitere Monomere sind z.B. auch Hydroxylgruppen enthaltende Monomere, insbesondere C₁-C₁₀-Hydroxyalkyl(meth)acrylate, (Meth)acrylamid.

Als weitere Monomere seien darüberhinaus Phenyloxyethylglykolmono- (meth-)acrylat, Glycidylacrylat, Glycidylmethacrylat, Amino- (meth-)acrylate wie 2-Aminoethyl-(meth)acrylat genannt.

Als weitere Monomere seien auch vernetzende Monomere genannt.

Das Polymer enthält vorzugsweise hydrophile Gruppen ausgewählt aus Carboxylgruppen, Hydroxylgruppen, Aminogruppen und Carbonsäureamidgruppen. Der Gehalt dieser hydrophilen Gruppen beträgt insbesondere 0,001 bis 0,5 Mol auf 100 g Polymer. Vorzugsweise ist der Gehalt mindestens 0,005 Mol besonders bevorzugt mindestens 0,008 Mol und maximal 0,2 Mol insbesondere maximal 0,1 Mol, ganz besonders bevorzugt maximal 0,05 bzw. 0.03 Mol auf 100g/Polymer.

Besonders bevorzugt sind die hydrophilen Gruppen, ausgewählt aus Carboxylgruppen, Hydroxylgruppen und Carbonsäureamidgruppen.

Besonders bevorzugt handelt es sich bei mindestens 20 Mol-% der Gesamtmolmenge dieser reaktiven Gruppen um Carboxylgruppen.

Unter Carboxylgruppen werden sowohl Carbonsäuregruppen als auch deren Salze verstanden. Im Falle der Salze handelt es sich bevorzugt um Salze mit flüchtigen Basen, z.B. Ammoniak.

Die reaktiven Gruppen können durch Copolymerisation der entsprechenden Monomere an das Polymer gebunden werden.

Bevorzugte Monomere mit hydrophilen Gruppen sind die oben genannten Monomere mit Carboxylgruppen und Hydroxylgruppen, insbesondere z.B. Acrylsäure.

Insbesondere ist das Polymer zu mindestens 60 Gew.-%, besonders bevorzugt zu mindestens 80 Gew.-% und ganz besonders bevorzugt zu mindestens 95 Gew.-% aus C₁ bis C₂₀ Alkyl(meth)acrylaten aufgebaut.

Die Herstellung der Polymere erfolgt in einer bevorzugten Ausführungsform durch Emulsionspolymerisation, es handelt sich daher um ein Emulsionspolymerisat.

Bei der Emulsionspolymerisation werden ionische und/oder nicht-ionische Emulgatoren und/oder Schutzkolloide bzw. Stabilisatoren als grenzflächenaktive Verbindungen verwendet.

Eine ausführliche Beschreibung geeigneter Schutzkolloide findet sich in Houben-Weyl, Methoden der organischen Chemie, Band XIV/1, Makromolekulare Stoffe, Georg-Thieme-Verlag, Stuttgart, 1961, S. 411 bis 420. Als Emulgatoren kommen sowohl anionische, kationische als auch nichtionische Emulgatoren in Betracht. Vorzugsweise werden als begleitende grenzflächenaktive Substanzen ausschließlich Emulgatoren eingesetzt, deren Molekulargewicht im Unterschied zu den Schutzkolloiden üblicherweise unter 2000 g/mol liegen. Selbstverständlich müssen im Falle der Verwendung von Gemischen grenzflächenaktiver Substanzen die Einzelkomponenten miteinander verträglich sein, was im Zweifelsfall an Hand weniger Vorversuche überprüft werden kann. Vorzugsweise werden anionische und nichtionische Emulgatoren als grenzflächenaktive Substanzen verwendet. Gebräuchliche begleitende Emulgatoren sind z.B. ethoxylierte Fettalkohole (EO-Grad: 3 bis 50, Alkylrest: C₈-bis C₃₆), ethoxylierte Mono-, Di- und Tri-Alkylphenole (EO-Grad: 3 bis 50, Alkylrest: C₄- bis C₉), Alkalimetallsalze von Dialkylestern der Sulfobernsteinsäure sowie Alkali- und Ammoniumsalze von Alkylsulfaten (Alkylrest: C₈- bis C₁₂), von ethoxylierten Alkanolen (EO-Grad: 4 bis 30, Alkylrest: C₁₂- bis C₁₈), von ethoxylierten Alkylphenolen (EO-Grad: 3 bis 50, Alkylrest: C₄- bis C₉), von Alkylsulfonsäuren (Alkylrest: C₁₂- bis C₁₈) und von Alkylarylsulfonsäuren (Alkylrest: C₉-bis C₁₈).

Weitere geeignete Emulgatoren sind Verbindungen der allgemeinen Formel II 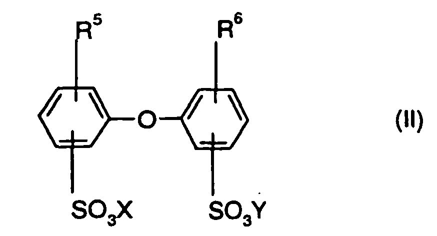 worin R⁵ und R⁶ Wasserstoff oder C₄- bis C₁₄-Alkyl bedeuten und nicht gleichzeitig Wasserstoff sind, und X und Y Alkalimetallionen und/oder Ammoniumionen sein können. Vorzugsweise bedeuten R⁵, R⁶ lineare oder verzweigte Alkylreste mit 6 bis 18 C-Atomen oder Wasserstoff und insbesondere mit 6, 12 und 16 C-Atomen, wobei R⁵ und R⁶ nicht beide gleichzeitig Wasserstoff sind. X und Y sind bevorzugt Natrium, Kalium oder Ammoniumionen, wobei Natrium besonders bevorzugt ist. Besonders vorteilhaft sind Verbindungen II in denen X und Y Natrium, R⁵ ein verzweigter Alkylrest mit 12 C-Atomen und R⁶ Wasserstoff oder R⁵ ist. Häufig werden technische Gemische verwendet, die einen Anteil von 50 bis 90 Gew.-% des monoalkylierten Produktes aufweisen, beispielsweise Dowfax^{®} 2A1 (Warenzeichen der Dow Chemical Company).

Geeignete Emulgatoren finden sich auch in Houben-Weyl, Methoden der organischen Chemie, Band 14/1, Makromolekulare Stoffe, Georg Thieme Verlag, Stuttgart, 1961, Seiten 192 bis 208.

Handelsnamen von Emulgatoren sind z.B. Dowfax^{®} 2 A1, Emulan^{®} NP 50, Dextrol^{®} OC 50, Emulgator 825, Emulgator 825 S, Emulan^{®} OG, Texapon^{®} NSO, Nekanil^{®} 904 S, Lumiten^{®} I-RA, Lumiten^{®} E 3065, Disponil^{®} FES 77, Lutensol^{®} AT 18, Steinapol VSL, Emulphor NPS 25.

Für die vorliegende Erfindung sind ionische Emulgatoren oder Schutzkolloide bevorzugt. Besonders bevorzugt handelt es sich um ionische Emulgatoren, insbesondere Salze und Säuren, wie Carbonsäuren, Sulfonsäuren und Sulfate, Sulfonate oder Carboxylate.

Die grenzflächenaktive Substanz wird üblicherweise in Mengen von 0,1 bis 10 Gew.-Teile, vorzugsweise 0,2 bis 5 Gew.-Teile bezogen auf 100 Gew.-Teile der zu polymerisierenden Monomeren verwendet.

Wasserlösliche Initiatoren für die Emulsionspolymerisation sind z.B. Ammonium- und Alkalimetallsalze der Peroxidischwefelsäure, z.B. Natriumperoxodisulfat, Wasserstoffperoxid oder organische Peroxide, z.B. tert-Butylhydroperoxid.

Geeignet sind auch sogenannte Reduktions-Oxidations(Red-Ox)-Initiator Systeme.

Die Red-Ox-Initiator-Systeme bestehen aus mindestens einem meist anorganischen Reduktionsmittel und einem anorganischen oder organischen Oxidationsmittel.

Bei der Oxidationskomponente handelt es sich z.B. um die bereits vorstehend genannten Initiatoren für die Emulsionspolymerisation.

Bei der Reduktionskomponenten handelt es sich z.B. um Alkalimetallsalze der schwefligen Säure, wie z.B. Natriumsulfit, Natriumhydrogensulfit, Alkalisalze der Dischwefligen Säure wie Natriumdisulfit, Bisulfitadditionsverbindungen aliphatischer Aldehyde und Ketone, wie Acetonbisulfit oder Reduktionsmittel wie Hydroxymethansulfinsäure und deren Salze, oder Ascorbinsäure. Die Red-Ox-Initiator-Systeme können unter Mitverwendung löslicher Metallverbindungen, deren metallische Komponente in mehreren Wertigkeitsstufen auftreten kann, verwendet werden.

Übliche Red-Ox-Initiator-Systeme sind z.B. Ascorbinsäure/Eisen(II)sulfat/Natriumperoxidisulfat, tert-Butylhydroperoxid/Natriumdisulfit, tert-Butylhydroperoxid/Na-Hydroxymethansulfinsäure. Die einzelnen Komponenten, z.B. die Reduktionskomponente, können auch Mischungen sein z.B. eine Mischung aus dem Natriumsalz der Hydroxymethansulfinsäure und Natriumdisulfit.

Die genannten Verbindungen werden meist in Form wässriger Lösungen eingesetzt, wobei die untere Konzentration durch die in der Dispersion vertretbare Wassermenge und die obere Konzentration durch die Löslichkeit der betreffenden Verbindung in Wasser bestimmt ist. Im allgemeinen beträgt die Konzentration 0,1 bis 30 Gew.-%, bevorzugt 0,5 bis 20 Gew.-%, besonders bevorzugt 1,0 bis 10 Gew.-%, bezogen auf die Lösung.

Die Menge der Initiatoren beträgt im allgemeinen 0,1 bis 10 Gew.-%, bevorzugt 0,5 bis 5 Gew.-%, bezogen auf die zu polymerisierenden Monomeren. Es können auch mehrere, verschiedene Initiatoren bei der Emulsionspolymerisation Verwendung finden.

Bei der Polymerisation können Regler eingesetzt werden, z.B. in Mengen von 0 bis 0,8 Gew.-Teile, bezogen auf 100 Gew.-Teile der zu polymerisierenden Monomeren, durch die Molmasse verringert wird. Geeignet sind z.B. Verbindungen mit einer Thiolgruppe wie tert.-Butylmercaptan, Thioglycolsäureethylacrylester, Mercaptoethynol, Mercaptopropyltrimethoxysilan oder tert.-Dodecylmercaptan.

Die Emulsionspolymerisation erfolgt in der Regel bei 30 bis 130, vorzugsweise 50 bis 90°C. Das Polymerisationsmedium kann sowohl nur aus Wasser, als auch aus Mischungen aus Wasser und damit mischbaren Flüssigkeiten wie Methanol bestehen. Vorzugsweise wird nur Wasser verwendet. Die Emulsionspolymerisation kann sowohl als Batchprozeß als auch in Form eines Zulaufverfahrens, einschließlich Stufen- oder Gradientenfahrweise, durchgeführt werden. Bevorzugt ist das Zulaufverfahren, bei dem man einen Teil des Polymerisationsansatzes vorlegt, auf die Polymerisationstemperatur erhitzt, anpolymerisiert und anschließend den Rest des Polymerisationsansatzes, üblicherweise über mehrere räumlich getrennte Zuläufe, von denen einer oder mehrere die Monomeren in reiner oder in emulgierter Form enthalten, kontinuierlich, stufenweise oder unter Überlagerung eines Konzentrationsgefälles unter Aufrechterhaltung der Polymerisation der Polymerisationszone zuführt. Bei der Polymerisation kann auch z.B. zur besseren Einstellung der Teilchengröße eine Polymersaat vorgelegt werden.

Die Art und Weise, in der der Initiator im Verlauf der radikalischen wässrigen Emulsionspolymerisation dem Polymerisationsgefäß zugegeben wird, ist dem Durchschnittsfachmann bekannt. Es kann sowohl vollständig in das Polymerisationsgefäß vorgelegt, als auch nach Maßgabe seines Verbrauchs im Verlauf der radikalischen wässrigen Emulsionspolymerisation kontinuierlich oder stufenweise eingesetzt werden. Im einzelnen hängt dies von der chemischen Natur des Initiatorsystems als auch von der Polymersiationstemperatur ab. Vorzugsweise wird ein Teil vorgelegt und der Rest nach Maßgabe des Verbrauchs der Polymerisationszone zugeführt.

Zur Entfernung der Restmonomeren wird üblicherweise auch nach dem Ende der eigentlichen Emulsionspolymerisation, d.h. nach einem Umsatz der Monomeren von mindestens 95 %, Initiator zugesetzt.

Die einzelnen Komponenten können dem Reaktor beim Zulaufverfahren von oben, in der Seite oder von unten durch den Reaktorboden zugegeben werden.

Bei der Emulsionspolymerisation werden wässrige Dispersionen des Polymeren in der Regel mit Feststoffgehalten von 15 bis 75 Gew.-%, bevorzugt von 40 bis 75 Gew.-% erhalten.

Für eine hohe Raum/Zeitausbeute des Reaktors sind Dispersionen mit einem möglichst hohen Feststoffgehalt bevorzugt. Um Feststoffgehalte > 60 Gew.-% erreichen zu können, sollte man eine bi- oder polymodale Teilchengröße einstellen, da sonst die Viskosität zu hoch wird, und die Dispersion nicht mehr handhabbar ist. Die Erzeugung einer neuen Teilchengeneration kann beispielsweise durch Zusatz von Saat (EP 81083), durch Zugabe überschüssiger Emulgatormengen oder durch Zugabe von Miniemulsionen erfolgen. Ein weiterer Vorteil, der mit der niedrigen Viskosität bei hohem Feststoffgehalt einhergeht, ist das verbesserte Beschichtungsverhalten bei hohen Feststoffgehalten. Die Erzeugung einer neuen/neuer Teilchengeneration/en kann zu einem beliebigen Zeitpunkt erfolgen. Er richtet sich nach den für eine niedrige Viskosität angestrebten Teilchengrößenverteilung.

Das so hergestellte Polymer wird vorzugsweise in Form seiner wässrigen Dispersion verwendet.

Die mittlere Teilchengröße der in der wässrigen Dispersion dispergierten Polymerteilchen ist vorzugsweise kleiner 300 nm, insbesondere kleiner 200 nm. Besonders bevorzugt liegt die mittlere Teilchengröße zwischen 140 und 200 nm.

Unter mittlerer Teilchengröße wird hier der d₅₀-Wert der Teilchengrößenverteilung verstanden, d.h. 50 Gew.-% der Gesamtmasse aller Teilchen haben einen kleineren Teilchendurchmesser als der d₅₀-Wert. Die Teilchengrößenverteilung kann in bekannter Weise mit der analytischen Ultrazentrifuge (W. Mäschtle, Makromolekulare Chemie 185 (1984), Seite 1025 - 1039) bestimmt werden.

Der pH-Wert der Polymerdispersion wird vorzugsweise auf pH größer 4,5, insbesondere auf einen pH-Wert zwischen 5 und 8 eingestellt.

Die Glasübergangstemperatur des Polymeren, bzw. des Polymeren beträgt vorzugsweise -60 bis 0°C, besonders bevorzugt -60 bis -10°C und ganz besonders bevorzugt -60 bis -20°C.

Die Glasübergangstemperatur lässt sich nach üblichen Methoden wie Differentialthermoanalyse oder Differentail Scanning Calorimetrie (s. z.B. ASTM 3418/82, sog. "midpoint temperature") bestimmen.

Der für die erfindungsgemäße Verwendung eingesetzte Klebstoff enthält weiterhin ein Aminotriazin.

Als Aminotriazine in Betracht kommen z.B. Melamin, Benzoguanamin, Acetoguanamin und Bisguanamine wie Adipo-, Glutaro- oder Methylglutarobisguanamin und Spiroguanamine. In Betracht kommen auch Verbindungen, welche mehrere, z.B. kondensierte, Aminotriazinkerne enthalten. Die Aminotriazine sind vorzugsweise zumindest teilweise methyloliert und verethert.

Bevorzugt sind zumindest teilweise methyloliertes und verethertes Melamin und entsprechende Verbindungen, welche mehrere Melaminkerne, z.B. 2 bis 5 über Methylolgruppen verbrückte Melamine enthalten, oder deren Gemische. Bevorzugte Aminotriazine enthalten im Mittel 1 bis 3, insbesondere 1 Melaminkern je Molekül.

Die Aminotriazine sind im Mittel mit mindestens 1 Mol, vorzugsweise mindestens 1,4 Mol, besonders bevorzugt mit mindestens 1,7 Mol Formaldehyd pro Mol primärer Aminogruppen methyloliert und diese Methylolgruppen im Mittel mit mindestens 0,5 Mol, vorzugsweise mindestens 0,6 Mol und besonders bevorzugt mit mindestens 0,7 Mol primären Alkoholen pro Mol Methylolgruppe verethert.

Bevorzugte primäre Alkohole sind insbesondere Alkanole, vorzugsweise C₁-C₄-Alkanole. Besonders bevorzugt ist Methanol.

Ein geeignetes Aminotriazin ist z.B. Hexamethoxymethylolmelamin (jede Aminogruppe des Melamin ist mit 2 Formaldehydgruppen methyloliert, jede Methylolgruppe mit Methanol verethert).

Bevorzugte Aminotriazinharze haben eine Wasserlöslichkeit von mindestens 500 g/Liter Wasser (21 °C, 1 bar).

Die Aminotriazinharze werden im allgemeinen in Form ihrer wässrigen Lösungen verwendet.

Der Feststoffgehalt dieser Lösungen liegt im allgemeinen zwischen 50 und 90 Gew.-%, bezogen auf das Gewicht der gesamten Lösung.

Die Lösung des Aminotriazinharzes kann einfach zur wässrigen Dispersion des Polymeren gegeben werden.

Die Menge des Aminotriazinharzes beträgt vorzugsweise 0,5 bis 40 Gew.-Teile (fest), besonders bevorzugt 0,5 bis 10 Gew.-Teile und ganz besonders bevorzugt 0,5 bis 5 Gew.-Teile auf 100 Gew.-Teile Polymer. Die Mindestmenge beträgt insbesondere mindestens 0,7, bzw. 1 Gew.-Teil.

Das Mischen des Polymeren mit dem Aminotriazinharz kann jederzeit erfolgen. Die Mischung bleibt verarbeitbar. Sogar bei 50°C beträgt die Topfzeit (Zeit, in der die Mischung verarbeitbar bleibt) mehr als 3 Tage, bei 20°C beträgt die Topfzeit Monate.

Die Klebstoffe, vorzugsweise Haftklebstoffe, können allein aus dem Polymeren bzw. der wässrigen Dispersion des Polymeren und dem Aminotriazinharz bestehen.

Die Klebstoffe und Haftklebstoffe können weitere Zusatzstoffe enthalten Füllstoffe, Farbstoffe, Verlaufsmittel, Verdicker oder Tackifier (klebrigmachende Harze), Tackifier sind z.B. Naturharze, wie Kolophoniumharze und deren durch Disproportionierung oder Isomerisierung, Polymerisation, Dimerisation, Hydrierung entstehenden Derivate. Diese können in ihrer Salzform (mit z.B. ein- oder mehrwertigen Gegenionen (Kationen) oder bevorzugt in ihrer veresterten Form vorliegen. Alkohole, die zur Veresterung verwendet werden, können ein- oder mehrwertig sein. Beispiele sind Methanol, Ethandiol, Diethylenglykol, Triethylenglykol, 1,2,3-Propanthiol, Pentaerythrit.

Des weiteren finden auch Kohlenwasserstoffharze, z.B. Cumaron-Inden-Harze, Polyterpen-Harze, Kohlenwasserstoffharze auf Basis ungesättigter CH-Verbindungen, wie Butadien, Penten, Methylbuten, Isopren, Piperylen, Divinylmethan, Pentadien, Cyclopenten, Cyclopentadien, Cyclohexadien, Styrol, a-Methylstyrol, Vinyltoluol Verwendung.

Als Tackifier werden zunehmend auch Polyacrylate, welche ein geringes Molgewicht aufweisen, verwendet. Vorzugsweise haben diese Polyacrylate ein gewichtsmittleres Molekulargewicht M_{w} unter 30 000. Die Polyacrylate bestehen bevorzugt zu mindestens 60, insbesondere mindestens 80 Gew.-% aus C₁-C₈ Alkyl(meth)acrylaten.

Bevorzugte Tackifier sind natürliche oder chemisch modifizierte Kolophoniumharze. Kolophoniumharze bestehen zum überwiegenden Teil aus Abietinsäure oder Abietinsäurederivaten.

Die Gewichtsmenge der Tackifier beträgt vorzugsweise 5 bis 100 Gew.-Teile. besonders bevorzugt 10 bis 50 Gew.-Teile. bezogen auf 100 Gew.-Teile Polymer (fest/fest).

Die Klebstoffe bzw. Haftklebstoffe finden ihre Verwendung zur Herstellung von selbstklebenden Artikeln, wie Etiketten, Klebebändern oder Klebefolien, z.B. Schutzfolien.

Die selbstklebenden Artikel bestehen im allgemeinen aus einem Träger und einer ein- oder beidseitig, vorzugsweise einseitig aufgebrachten Schicht des Klebstoffs.

Bei dem Trägermaterial handelt es sich um Kunststofffolien aus Weich-PVC.

Unter Weich-PVC versteht man Polyvinylchlorid, welches einen Gehalt an Weichmachern hat und eine erniedrigte Erweichungstemperatur aufweist. Übliche Weichmacher sind z.B. Phthalate, Epoxide, Adipinsäureester. Der Gehalt der Weichmacher im Weich-PVC beträgt i.a. mehr als 10, insbesondere mehr als 20 Gew.-%.

Bei Weich PVC können Weichmacher in die Klebstoffschicht migrieren und die Klebstoffeigenschaften deutlich verschlechtern. Mit dem erfindungsgemäßen Klebstoff wirkt sich eine Migration der Weichmacher nicht oder kaum auf die Eigenschaften des Klebstoffs aus. Weiterhin ist vor allem bei Weich-PVC ein Schrumpfen der Substrate durch den erfindungsgemäßen Klebstoff vermieden oder verringert.

Gegenstand der vorliegenden Erfindung sind daher selbstklebende Artikel mit Weich-PVC als Trägermaterial und einer darauf beschichteten Klebstoffschicht aus dem obigen Klebstoff.

Zur Herstellung der Klebstoffschicht auf dem Trägermaterial kann das Trägermaterial in üblicher Weise beschichtet werden.

Die erhaltenen, beschichteten Substrate werden z.B. als Selbstklebeartikel, wie Etiketten, Klebebänder oder Folien verwendet.

Die selbstklebenden Artikel mit Weich-PVC als Trägermaterial eignen sich insbesondere für Außenanwendungen.

Insbesondere können bedruckte selbstklebende Folien im Außenbereich verwendet und z. B. auf Reklametafeln oder Fahrzeuge aller Art geklebt werden.

Die erfindungsgemäßen selbstklebenden Artikel haben gute anwendungstechnische Eigenschaften, insbesondere eine gute Schälfestigkeit (Adhäsion) und Scherfestigkeit (Kohäsion). Die Eigenschaften bleiben auch bei Weich-PVC als Trägermaterial gut.

Eine Trübung der Klebstoffschicht durch Einwirkung von Feuchtigkeit (Weißanlaufen) ist nicht oder kaum zu beobachten. Die Klebstoffschicht hat daher eine hohe Wasserbeständigkeit. Ein Schrumpfen der selbstklebenden Artikel ist kaum zu beobachten, auch nicht, wenn die Artikel hohen Temperaturen, z.B. mehr als 50°C, ausgesetzt sind.

### Beispiele

Einsatzstoffe:
Acronal® DS 3559: ein Carboxylgruppen enthaltendes Polyacrylat auf Basis Ethylhexylacrylat, Festgehalt 51 %.
Luwipal® 073: ein teil-Methylol verethertes Melaminharz, Festgehalt 80 %.
Saduren® 163: ein teil-Methylol verethertes Melaminharz, , Festgehalt 70 %.
   Die Mischungen wurden durch Einrühren der Aminotriazinharzlösungen in die Polymerdispersion hergestellt. Angegebene Gewichtsanteile in der Tabelle beziehen sich auf die ganze Harzlösung bzw. Polymerdispersion.

### Prüfmethoden

Dimensionsstabilität (Schrumpfverhalten):
Zur Bestimmung der Dimensionsstabilität mit der Kreuzschnittmethode werden die Klebstoffe auf Siliconpapier (Laufenberg NSA 1370 weiss Beschichtung 56 B 4) mit 25 g/m² trocken beschichtet. Nach der Trocknung 3 Minuten bei 90°C wird die Klebstoffschicht auf Weich-PVC Folie (Renolit weiss, SK-Monomer 80790 transferiert).
Nach 24 h Lagerung bei Raumtemperatur wird das Siliconpapier abgezogen und die beschichtete Weich-PVC Folie auf eine Glasplatte (25 cm x 25 cm) blasenfrei verklebt und angerollt. Wichtig ist, dass die Laufrichtung der Folie beachtet und gekennzeichnet wird. Die verklebte Folie wird nun mit einer Rasierklinge in einem Klingenhalter in der Mitte in Längs- und in Querrichtung mit je einem Schnitt geteilt. Nach dem Schneiden sollen vier gleich große Quadrate entstanden sein. Die Glasplatten werden anschließend bei 70°C gelagert. Nach 3, 5, 10 und 14 Tagen werden die Glasplatten etwa 1 Stunde bei RT abgekühlt und die Breite des Schnittspaltes im kalten Zustand gemessen.

Je geringer die Spaltbreite, um so besser ist das Schrumpfverhalten.

Schäl- und Scherfestigkeit

Weich-PVC wurde wie oben beschrieben mit Klebstoff beschichtet.

Anschließend wurde die Schälfestigkeit (Adhäsion) und Scherfestigkeit (Kohäsion) bestimmt.

Der beschichtete Träger wurde in 25 mm breite Prüfstreifen geschnitten. Zur Bestimmung der Scherfestigkeit wurden die Prüfstreifen mit einer verklebten Fläche von 25 mm² auf ein V2A-Prüfblech geklebt, mit einer 1 kg schweren Rolle 1 mal angerollt, 10 min-gelagert (im Normklima, 50 % rel. Luftfeuchtigkeit 1 bar, 23°C) und anschließend hängend mit einem 1 kg Gewicht belastet (im Normklima). Das Maß für die Scherfestigkeit war die Zeit bis zum Abfallen des Gewichts; es wurde jeweils der Durchschnitt aus 5 Messungen berechnet.

Bei der Bestimmung der Schälfestigkeit (Adhäsion) wurde jeweils ein 2,5 cm breiter Prüfstreifen auf einen Prüfkörper aus Stahl geklebt und mit einer 1 kg schweren Rolle 1 mal angerollt. Er wurde nach 1 Minute bzw. nach 24 Stunden Lagerung im Normklima mit einem Ende in die oberen Backen einer Zug-Dehnungs-Prüfapparatur eingespannt. Der Klebestreifen wurde mit 300 mm/min unter einem 180° Winkel von der Prüffläche abgezogen d.h. der Klebestreifen wurde umgebogen und parallel zum Prüfblech abgezogen und der dazu benötigte Kraftaufwand gemessen. Das Maß für die Schälfestigkeit war die Kraft in N/2,5 cm, die sich als Durchschnittswert aus fünf Messungen ergab. Die Prüfung erfolgte ebenfalls im Normklima.

| Klebstoff | Spaltbreite Ausgangswert vor der Lagerung < 0,05 mm | | | | | | | |
|---|---|---|---|---|---|---|---|---|
| | Spaltbreite in mm nach Lagerung bei 70°C | | | | | | | |
| | 3 Tage | | 5 Tage | | 10 Tage | | 14 Tage | |
| | senkr. | waagr. | senkr. | waagr. | senkr. | waagr. | senkr. | waagr. |
| Acronal DS 3559 | 0,60 | 0,75 | 0,70 | 0,80 | 0,75 | 0,80 | 0,75 | 0,80 |
| + Luwipal 073 (100:1) | 0,30 | 0,35 | 0,35 | 0,40 | 0,40 | 0,45 | 0,40 | 0,45 |
| + Luwipal 073 (100:2) | 0,15 | 0,20 | 0,15 | 0,20 | 0,20 | 0,20 | 0,20 | 0,20 |
| + Luwipal 073 (100:3) | 0,10 | 0,10 | 0,10 | 0,10 | 0,10 | 0,10 | 0,10 | 0,10 |
| + Saduren 163 (100:1) | 0,30 | 0,35 | 0,35 | 0,40 | 0,35 | 0,40 | 0,35 | 0,40 |
| + Saduren 163 (100:2) | 0,10 | 0,15 | 0,15 | 0,15 | 0,15 | 0,20 | 0,15 | 0,20 |
| + Saduren 163 (100:3) | 0,05 | 0,10 | 0,10 | 0,10 | 0,10 | 0,10 | 0,10 | 0,10 |

### Klebewerte

| | Schälfestigkeit in N/25 mm | | Scherfestigkeit in min 12,5 x 12,5 mm 10' / 1 kg |
|---|---|---|---|
| | 1 min | 24 h | |
| Acronal DS 3559 | 11,8 | 31,1 | 31 |
| + Luwipal 073 (100:1) | 11,2 | 22,1 | 98 |
| + Luwipal 073 (100:2) | 7,4 | 19,9 | 108 |
| + Luwipal 073 (100:3) | 5,5 | 19,2 | 145 |
| + Saduren 163 (100:1) | 6,8 | 19,8 | 86 |
| + Saduren 163 (100:2) | 6,6 | 17,3 | 252 |
| + Saduren 163 (100:3) | 6,7 | 15,6 | 720 |

## Patentansprüche

1. Verwendung eines Klebstoffs, enthaltend
A) ein durch radikalische Polymerisation erhältliches Polymer, welches zu mindestens 60 Gew. % aus sogenannten Hauptmonomeren, ausgewählt aus
C1 bis C20 Alkyl(meth)acrylaten, Vinylestern von bis zu 20 C-Atome enthaltenden Carbonsäuren, Vinylaromaten mit bis zu 20 C-Atomen, ethylenisch ungesättigten Nitrilen, Vinylhalogeniden, Vinylethern von 1 bis 10 C Atome enthaltenden Alkoholen, aliphatischen Kohlenwasserstoffen mit 2 bis 8 C Atomen und ein oder zwei Doppelbindungen oder Mischungen dieser Monomeren, aufgebaut ist, und
B) ein Aminotriazinharz zur Herstellung von selbstklebenden Artikeln mit Weich-PVC als Trägermaterial, wobei das Polymer ein Emulsionspolymerisat ist und in Form seiner wässrigen Dispersion verwendet wird..

2. Verwendung gemäß Anspruch 1, **dadurch gekennzeichnet, dass** das Polymer ein Emulsionspolymerisat ist und zu mindestens 60 Gew. % aus C1 bis C20 Alkyl(meth)acrylaten aufgebaut ist.

3. Verwerdung gemäß Anspruch 1 oder 2, **dadurch gekennzeichnet, dass** das Polymer 0,001 bis 0,5 Mol hydrophile Gruppen, ausgewählt aus Carboxylgruppen, Hydroxylgruppen, Aminogruppen oder Carbonsäureamidgruppen auf 100g Polymer enthält.

4. Verwendung gemäß einem der Ansprüche 1 bis 3, **dadurch gekennzeichnet, dass** es sich bei dem Aminotriazinharz um ein Melaminharz handelt.

5. Verwendung gemäß einem der Ansprüche 1 bis 4, **dadurch gekennzeichnet, dass** die Aminogruppen des Aminotriazinharzes im Mittel mit mindestens 1 Mol Formaldehyd pro Mol Aminogruppe methyloliert sind.

6. Verwendung gemäß Anspruch 5, **dadurch gekennzeichnet, dass** die Methylolgruppen im Mittel mit mindestens 0,5 Mol primärem Alkohol pro Mol Methylolgruppe verethert sind.

7. Verwendung gemäß einem der Ansprüche 1 bis 6, **dadurch gekennzeichnet, dass** die Amingruppen des Aminotriazinharzes vollständig methyloliert sind und die Methylolgruppen vollständig mit einem primären Alkohol verethert sind.

8. Verwendung gemäß einem der Ansprüche 1 bis 7, **dadurch gekennzeichnet, dass** das Aminotriazinharz in Mengen von 0,5 bis 40 Gew. Teilen, bezogen auf 100 Gew. Teile Polymer, vorliegt.

9. Verwendung gemäß einem der Ansprüche 1 bis 8, **dadurch gekennzeichnet, dass** es sich um einen Haftklebstoff handelt.

10. Selbstklebende Artikel erhältlich unter Verwendung gemäß einem der Ansprüche 1 bis 9.

## Claims

1. The use of an adhesive comprising
A) a polymer obtainable by free-radical addition polymerization and synthesized from at least 60% by weight of principal monomers selected from
C1 to C20 alkyl (meth)acrylates, vinyl esters of carboxylic acids comprising up to 20 carbon atoms, vinylaromatics having up to 20 carbon atoms, ethylenically unsaturated nitriles, vinyl halides, vinyl ethers of alcohols comprising 1 to 10 carbon atoms, aliphatic hydrocarbons having 2 to 8 carbon atoms and one or two double bonds, and mixtures of these monomers, and
B) an aminotriazine resin for producing self-adhesive articles comprising plasticized PVC as backing material, the polymer being an emulsion polymer and being used in the form of its aqueous dispersion.

2. The use according to claim 1, wherein the polymer is an emulsion polymer and is synthesized from at least 60% by weight of C1 to C20 alkyl (meth)acrylates.

3. The use according to claim 1 or 2, wherein the polymer comprises from 0.001 to 0.5 mol of hydrophilic groups selected from carboxyl, hydroxyl, amino, and carboxamido groups per 100 g of polymer.

4. The use according to any one of claims 1 to 3, wherein said aminotriazine resin is a melamine resin.

5. The use according to any one of claims 1 to 4, wherein the amino groups of the aminotriazine resin are methylolated on average with at least 1 mol of formaldehyde per mole of amino group.

6. The use according to claim 5, wherein the methylol groups are etherified on average with at least 0.5 mol of primary alcohol per mole of methylol group.

7. The use according to any one of claims 1 to 6, wherein the amino groups of the aminotriazine resin are fully methylolated and the methylol groups are fully etherified with a primary alcohol.

8. The use according to any one of claims 1 to 7, wherein the aminotriazine resin is present in amounts of from 0.5 to 40 parts by weight per 100 parts by weight of polymer.

9. The use according to any one of claims 1 to 8, wherein the adhesive is a pressure sensitive adhesive.

10. A self-adhesive article obtainable through use according to any one of claims 1 to 9.

## Revendications

1. Utilisation d'un adhésif, contenant
A) un polymère pouvant être obtenu par polymérisation radicalaire, qui est constitué à raison d'au moins 60% en poids par ce qu'on appelle des monomères principaux, choisis parmi les (méth)acrylates d'alkyle en C1 à C20, les esters vinyliques d'acides carboxyliques contenant jusqu'à 20 atomes de carbone, les aromatiques de vinyle comprenant jusqu'à 20 atomes de carbone, les nitriles éthyléniquement insaturés, les halogénures de vinyle, les vinyléthers d'alcools contenant 1 à 10 atomes de carbone, les hydrocarbures aliphatiques comprenant 2 à 8 atomes de carbone et une ou deux doubles liaisons ou des mélanges de ces monomères, et
B) une résine aminotriazinique pour la production d'objets autoadhésifs avec du PVC souple comme matériau support, le polymère étant un polymère en émulsion et utilisé sous forme de sa dispersion aqueuse.

2. Utilisation selon la revendication 1, **caractérisée en ce que** le polymère est un polymère en émulsion et est constitué à raison d'au moins 60% en poids par des (méth)acrylates d'alkyle en C1 à C20.

3. Utilisation selon la revendication 1 ou 2, **caractérisée en ce que** le polymère contient 0,001 à 0,5 mole de groupes hydrophiles, choisis parmi les groupes carboxyle, les groupes hydroxyle, les groupes amino ou les groupes amide d'acide carboxylique, par 100 g de polymère.

4. Utilisation selon l'une quelconque des revendications 1 à 3, **caractérisée en ce qu'**il s'agit, pour la résine aminotriazinique, d'une résine de mélamine.

5. Utilisation selon l'une quelconque des revendications 1 à 4, **caractérisée en ce que** les groupes amino de la résine aminotriazinique sont en moyenne méthylolisés avec au moins- 1 mole de formaldéhyde par mole de groupe amino.

6. Utilisation selon la revendication 5, **caractérisée en ce que** les groupes méthylol sont en moyenne éthérifiés avec au moins 0,5 mole d'alcool primaire par mole de groupe méthylol.

7. Utilisation selon l'une quelconque des revendications 1 à 6, **caractérisée en ce que** les groupes amine de la résine aminotriazine sont complètement méthylolisés et les groupes méthylol sont complètement éthérifiés avec un alcool primaire.

8. Utilisation selon l'une quelconque des revendications 1 à 7, **caractérisée en ce que** la résine aminotriazinique se trouve en des quantités de 0,5 à 40 parties en poids, par rapport à 100 parties en poids de polymère.

9. Utilisation selon l'une quelconque des revendications 1 à 8, **caractérisée en ce qu'**il s'agit d'un autoadhésif.

10. Objet autoadhésif pouvant être obtenu par l'utilisation selon l'une quelconque des revendications 1 à 9.
